# NEUE EUROPÄISCHE PATENTSCHRIFT

(11) **EP 3 103 654 B2**
(45) Veröffentlichungstag und Bekanntmachung des Hinweises auf die Entscheidung über den Einspruch: **20.03.2024**
(45) Hinweis auf die Patenterteilung: 19.09.2018
(21) Anmeldenummer: 16169820.4
(22) Anmeldetag: 17.05.2016
(51) Int. Cl.: B60C 1/00, C08C 19/25, C08L 9/06

(54) **KAUTSCHUKMISCHUNG UND FAHRZEUGREIFEN**
RUBBER COMPOSITION AND VEHICLE TYRE
MÉLANGE DE CAOUTCHOUC ET PNEU DE VEHICULE

(30) Priorität: 08.06.2015 DE 102015210423
(43) Veröffentlichungstag der Anmeldung: 14.12.2016
(73) Patentinhaber: Continental Reifen Deutschland GmbH, 30175 Hannover (DE)
(72) Erfinder: Pavon Sierra, Viktoria, 30419 Hannover (DE); Müller, Norbert, 29336 Nienhagen (DE); Sá, Catarina, 30916 Isernhagen (DE); Torbrügge, Thorsten, 30855 Langenhagen (DE); Vatterott, Christoph, 30826 Seelze (DE); Stark, Anette, 30451 Hannover (DE)
(74) Vertreter: Pelster Behrends Patentanwälte PartG mbB

(56) Entgegenhaltungen:
- EP-A1- 2 098 564
- DATABASE WPI Week 201333 Thomson Scientific, London, GB; AN 2013-G94313 XP002762443, & JP 2013 082771 A (ASAHI KASEI KK) 9. Mai 2013 (2013-05-09)
- DATABASE WPI Week 201433 Thomson Scientific, London, GB; AN 2014-H88096 XP002762444, & JP 2014 080504 A (TOYO RUBBER IND CO LTD) 8. Mai 2014 (2014-05-08)
- DATABASE WPI Week 201431 Thomson Scientific, London, GB; AN 2014-G89263 XP002762445, & JP 2014 074136 A (TOYO RUBBER IND CO LTD) 24. April 2014 (2014-04-24)
- DATABASE WPI Week 201431 Thomson Scientific, London, GB; AN 2014-G89263 XP002762446, & JP 2014 074136 A (TOYO RUBBER IND CO LTD) 24. April 2014 (2014-04-24)

## Beschreibung

Die Erfindung betrifft eine schwefelvernetzbare Kautschukmischung, insbesondere für Laufstreifen von Fahrzeugreifen, und einen Fahrzeugreifen.

Da die Fahreigenschaften eines Reifens, insbesondere eines Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Durch den teilweisen oder vollständigen Ersatz des Füllstoffes Ruß durch Kieselsäure in Kautschukmischungen wurden die Fahreigenschaften in den vergangenen Jahren insgesamt auf ein höheres Niveau gebracht. Die bekannten Zielkonflikte der sich gegensätzlich verhaltenden Reifeneigenschaften bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich.

Um die Zielkonflikte im Laufstreifen zu lösen, sind schon vielfältige Ansätze verfolgt worden. So hat man beispielsweise unterschiedlichste, auch modifizierte Polymere, Harze, Weichmacher und hochdisperse Füllstoffe für Kautschukmischungen eingesetzt und man hat versucht, die Vulkanisateigenschaften durch Modifikation der Mischungsherstellung zu beeinflussen.
Aus der EP 1052270 A sind z. B. Laufstreifenmischungen auf von Ruß als Füllstoff bekannt, die für einen guten Griff auf unter anderem ein flüssiges Polymer, z. B. Polybutadien, enthalten.
Aus der DE 3804908 A1 sind ebenfalls Laufstreifenmischungen auf Basis von Ruß als Füllstoff bekannt, die für gute Wintereigenschaften flüssiges Polybutadien enthalten.
Flüssiges Polybutadien mit hohem Vinylgehalt und einer hohen Glasübergangstemperatur (T_{g}) wird in der EP 1035164 A für Reifenlaufstreifen als Ersatz für herkömmliche Weichmacheröle vorgeschlagen.
Die Verwendung von flüssigem Polybutadien in herkömmlichen Mischungen wirkt sich allerdings sehr negativ auf das Trockenbremsen und Trockenhandling von Reifen aus.
Die DE 102008058996 A1 und die DE102008058991 A1 offenbaren als Ersatz für übliche Weichmacheröle endständig aminmodifizierte flüssige Polybutadiene bzw. carboxyl-endständig modifizierte flüssige Polybutadiene in Laufstreifenmischungen mit einer hohen Menge an Synthesekautschuk. Die Reifen sollen sich durch eine sehr gute Ausgewogenheit zwischen niedrigem Kraftstoffverbrauch und guten Hafteigenschaften und die Fähigkeit zur Unterdrückung der Rissbildung am Boden von Profilrillen unter gleichzeitiger Wahrung der Verschleißfestigkeit auszeichnen.
Die EP 2060604 B1 offenbart eine Kautschukmischung enthaltend ein funktionalisiertes Polymer mit einem Mw von 20000 g/mol sowie Ruß als Füllstoff in Kombination mit 60 phr Naturkautschuk.
In der US 20020082333 A1 wird zur Verbesserung der Prozessierbarkeit ein mit Triethoxysilan modifiziertes Polybutadien anstelle eines Silans in einer NR-freien Kautschukmischung auf Basis von Synthesekautschuk und Kieselsäure als Füllstoff eingesetzt.
Die JP 2013082771 offenbart eine Kombination von zwei modifizierten Dienkautschuken A und B, welche jeweils Modifizierungen aufweisen. Die modifizierten Dienkautschuke A und B stellen aufgrund ihrer Gewichtsmittel des Molekulargewichtes (bei Raumtemperatur) Festkautschuke dar.

Die JP 2014080504 offenbart eine modifizierte Kieselsäure, wobei die Oberfläche der Kieselsäure mit einem modifizierten flüssigen Polybutadien und mit einem schwefelhaltigen Silan und optional mit einem Aminosilan modifiziert sein kann.

Neben den Anforderungen an die genannten physikalischen Eigenschaften muss eine Kautschukmischung zudem so beschaffen sein, dass daraus produzierte Produkte, wie ein Fahrzeugreifen, möglichst einfach hergestellt werden können. Dabei spielt die Heizkinetik der Kautschukmischung für die Industrialisierbarkeit eine wichtige Rolle. Ein entscheidender Aspekt ist die Dauer der nötigen Beheizung der Kautschukmischung und damit des Reifens zur Vulkanisation während des Herstellungsprozesses. Längeres Heizen des Reifens verursacht einen höheren Energieverbrauch, während ein zu kurzes Heizen zu einer nicht ausreichenden Vernetzung der Polymerketten führt, womit die strukturelle Haltbarkeit im Fahrbetrieb nicht gegeben ist. Ungünstig ist es auch, wenn nur ein Bauteil ein längeres Beheizen erfordert, da somit andere Bauteile überheizt werden und es zu einer sogenannten Reversion kommen kann. Hierbei werden die entstandenen Schwefelbrücken zwischen den Polymeren teilweise wieder abgebaut, was wiederum eine schlechtere Haltbarkeit hervorruft.
Das Ziel liegt daher darin, den Reifen mit seinen verschiedenen Komponenten derart auszulegen, dass bei einem möglichst geringen Energieverbrauch alle Bauteile möglichst optimal beheizt werden.
Der schnellen Vernetzbarkeit für einen niedrigen Energieverbrauch sind allerdings durch den Produktionsprozess der einzelnen Kautschukmischungen Grenzen gesetzt, da es bei der Extrusion durch Schablonen zur Ausformung einzelner Bauteile einer Temperaturerhöhung kommt. Diese kann zu dem sogenannten "Anscorchen" einer Mischung, also einer frühzeitigen unerwünschten Vorvernetzung, führen.

Man ist daher bestrebt in Laufstreifen von Fahrzeugluftreifen Kautschukmischungen einzusetzen, die sich sowohl gut prozessieren lassen als auch gute Reifeneigenschaften erzielen ohne Einbußen in der Heizkinetik hinnehmen zu müssen.

Der vorliegenden Erfindung liegt nun daher die Aufgabe zugrunde, eine schwefelvernetzbare Kautschukmischung bereitzustellen, die eine Verbesserung des Rollwiderstandes bei gleichbleibenden sonstigen Reifeneigenschaften ermöglicht, und zusätzlich sollen die Heizzeiten dahingehend verbessert werden, sodass eine moderate Zeit zum Ausheizen des Reifens ohne eine gleichzeitige Scorch-Anfälligkeit ermöglicht wird.

Gelöst wird diese Aufgabe durch eine schwefelvernetzbare Kautschukmischung enthaltend:
- wenigstens einen Dienkautschuk und
- wenigstens eine Kieselsäure und
- 3 bis 15 phf zumindest eines geblockten Mercaptosilans, wobei geblockte Mercaptosilane eine Schutzgruppe am Schwefelatom aufweisen, wobei die Schutzgruppen Acylgruppen sind, und
- 1 bis 40 phr zumindest eines flüssigen Polybutadiens, welches endständig organosilicium-modifiziert ist, und ein Gewichtsmittel Mw des Molekulargewichts gemäß GPC von 500 bis 12000 g/mol aufweist, wobei das flüssige Polybutadien mit zumindest einem Rest gemäß Formel I) modifiziert ist:

   I) (R¹ R² R³)Si-

   wobei R¹, R², R³ in den Strukturen gleich oder sein können und ausgewählt sein können aus linearen verzweigten Alkoxy-, Cycloalkoxy,- Alkyl-, Cycloalkyl- oder Arylgruppen mit 1 bis 20 Kohlenstoffatomen, und der Rest gemäß Formel I) direkt oder über eine Brücke die Polymerkette des Polybutadiens angebunden ist und die Brücke aus einer gesättigten oder ungesättigten Kohlenstoffkette besteht, die auch cyclische und/oder aliphatische und/oder aromatische Elemente sowie in an der Kette Heteroatome enthalten kann.

Überraschenderweise weist die erfindungsgemäße Kautschukmischung durch die Kombination der Bestandteile ein verbessertes Rollwiderstandsverhalten bei gleichbleibenden sonstigen Reifeneigenschaften und eine gleiche oder erhöhte Anvulkanisationszeit t₁₀ sowie eine Verringerung der Ausvulkanisationszeiten t₉₀ und t₉₅ auf. Somit ist es möglich, mit der Kautschukmischung Erzeugnisse wie z.B. Fahrzeugluftreifen herzustellen, die kostengünstig ausgeheizt werden können ohne die Gefahr des Überheizens anderer Bauteile in Kauf nehmen zu müssen. Dies ermöglicht eine ökonomisch sinnvolle Verarbeitung der erfindungsgemäßen Kautschukmischung bei gleichzeitiger Prozesssicherheit, da die Kautschukmischung keine Scorch-Anfälligkeit zeigt.

Eine weitere Aufgabe, die der vorliegenden Erfindung zugrunde liegt, besteht darin einen Fahrzeugreifen bereitzustellen, der einen geringeren (und damit verbesserten) Rollwiderstand bei aufweist und gleichzeitig kostengünstiger und energiesparender hergestellt werden kann, ohne dass die sonstigen Reifeneigenschaften signifikant negativ beeinträchtigt werden. Gelöst wird die Aufgabe dadurch, dass der Fahrzeugreifen in wenigstens einem Bauteil wenigstens ein Vulkanisat wenigstens einer schwefelvernetzbaren Kautschukmischung mit oben Merkmalen aufweist. Bevorzugt weist der Fahrzeugreifen die Kautschukmischung wenigstens im Laufstreifen auf, und hierbei bevorzugt in der Cap im Falle eines Laufstreifens mit einer Cap/Base-Konstruktion.

Unter "Cap" ist im Rahmen der vorliegenden Erfindung der mit der Fahrbahn in Berührung kommende Teil des Laufstreifens zu verstehen, der radial außen angeordnet ist (Laufstreifenoberteil oder Laufstreifencap).

Unter "Base" ist im Rahmen der vorliegenden Erfindung der Teil des Laufstreifens zu verstehen, der radial innen angeordnet ist, und somit im Fahrbetrieb nicht oder nur am Ende des Reifenlebens mit der Fahrbahn in Berührung kommt (Laufstreifenunterteil oder Laustreifenbase).

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Die erfindungsgemäße Kautschukmischung ist ferner auch für Laufstreifen geeignet, die aus verschiedenen nebeneinander und/oder untereinander angeordneten Laufstreifenmischungen bestehen (Multikomponentenlaufstreifen).

Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzbaren Kautschukmischung näher beschrieben. Sämtliche Ausführungen gelten auch für den erfindungsgemäßen Fahrzeugreifen, der die erfindungsgemäße Kautschukmischung in wenigstens einem Bauteil aufweist.

Die in dieser Schrift verwendete Angabe phr (parts per parts of rubber by weight) ist dabei die in der übliche Mengenangabe für Mischungsrezepturen. Die Dosierung Gewichtsteile der einzelnen Substanzen wird in dieser Schrift 100 Gewichtsteile der gesamten Masse aller in der Mischung vorhandenen hochmolekularen und dadurch festen Kautschuke bezogen. Das erfindungsgemäß enthaltene Polybutadien mit Mw von 500 bis 12000 g/mol geht daher nicht als Kautschuk in hundert Teile der phr-Berechnung ein.
Die in dieser Schrift verwendete Angabe phf (parts per hundred parts of filler by weight) ist dabei die in der Kautschukindustrie gebräuchliche Mengenangabe für Kupplungsagenzien für Füllstoffe.
Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Die Bestimmung des Gewichtsmittels Mw und des Zahlenmittels Mn des Molekulargewichtes der Polymere erfolgt mittels Gelpermeationschromatographie (GPC mit Tetrahydrofuran (THF) als Elutionsmittel bei 40 °C, Apparat PPS, kalibriert mit Polystyrol-Standard; Größenausschlußchromatographie; engl. SEC = size exclusion chromatography in Anlehnung an BS ISO 11344:2004) Im Rahmen der vorliegenden Erfindung wird die Abkürzung Mw für das Gewichtsmittel des Molekulargewichts verwendet.

Erfindungswesentlich enthält die schwefelvernetzbare Kautschukmischung wenigstens ein flüssiges Polybutadien, welches endständig organosilicium-modifiziert ist und ein Gewichtsmittel Mw des Molekulargewichts gemäß GPC von 500 bis 12000 g/mol aufweist. Hierbei beinhaltet der Wertebereich des Mw, dass es sich bei Raumtemperatur um ein flüssiges Polybutadien handelt. Der Einfachheit halber wird deshalb im Rahmen der vorliegenden Erfindung auch der kurze Ausdruck "flüssiges Polybutadien" verwendet.

Die Angabe des Mw bezieht sich hierbei auf das Polybutadien inklusive der Organosilicium-Modifizierung. Erfindungsgemäß ist das flüssige Polybutadien mit zumindest einem Rest gemäß Formel I) modifiziert:

I) (R¹R²R³) Si-

wobei R¹, R², R³ in den Strukturen gleich oder verschieden sein können und ausgewählt sein können aus linearen oder verzweigten Alkoxy-, Cycloalkoxy,- Alkyl-, Cycloalkyl- oder Arylgruppen mit 1 bis 20 Kohlenstoffatomen, und wobei der Rest gemäß Formel I) direkt oder über eine Brücke an die Polymerkette des Polybutadiens angebunden ist und wobei die Brücke aus einer gesättigten oder ungesättigten Kohlenstoffkette besteht, die auch cyclische und/oder aliphatische und/oder aromatische Elemente sowie in oder an der Kette Heteroatome enthalten kann.

Mit einer derartigen Modifizierung ergeben sich besonders gute Rollwiderstandsindikatoren.

Gemäß einer bevorzugten Ausführungsform der Erfindung sind alle Gruppen R¹, R², R³ Alkoxygruppen. Besonders bevorzugt ist wenigstens eine der drei Gruppen R¹, R², R³ eine Ethoxygruppe. Ganz besonders bevorzugt handelt es sich bei allen drei Gruppen R¹, R², R³ um jeweils eine Ethoxygruppe (abgekürzt mit OEt) . Dies gilt für alle genannten Ausführungsformen der Erfindung inkl. den Formeln II) und III).

Gemäß einer bevorzugten Ausführungsform der Erfindung ist der Rest gemäß Formel I) nicht direkt, sondern über eine Brücke angebunden. Bevorzugt ist damit ein Rest inkl. Brücke gemäß Formel II) an die Polymerkette des Polybutadiens angebunden.

II) (R¹R²R³) Si-Y-X-

wobei in Formel II) Y eine Alkylkette (-CH₂)ₙ- mit n = 1 bis 8 ist und X eine funktionelle Gruppe, die ausgewählt ist aus der Gruppe bestehend aus Ester, Ether, Urethan, Harnstoff, Amin, Amid, Thioether, Thioester, ist.

Unter Urethan wird im Rahmen der vorliegenden Erfindung eine Gruppierung -N(H)-C(O)-O- verstanden.

Gemäß einer besonders vorteilhaften Ausführungsform der Erfindung ist das flüssige Polybutadien mit einem Rest gemäß Formel II) modifiziert, bei dem X = Propyl (n = 3) und Y = Urethan (-N(H)-C(O)-O-) und die Reste R¹, R² und R³ alle eine Ethoxygruppe (OEt) sind.

Hiermit ergibt sich als bevorzugte Strukturformel des organosilicium-modifizierten flüssigen Polybutadiens die Formel III)

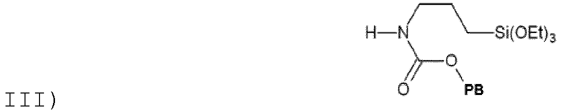

Hierbei ist PB = Polybutadien und stellt damit die Polymerkette der Monomere dar.

Das flüssige Polybutadien weist ein Mw von 500 bis 12000 g/mol auf. Hiermit ergeben sich sehr gute Eigenschaften hinsichtlich des Rollwiderstandes sowie der Verarbeitbarkeit, da Mw unter 12000 eine Flüssigdosierung aufgrund der niedrigen Viskositäten erlauben.

Besonders bevorzugt weist das flüssige Polybutadien ein Mw von 1000 bis 9000 g/mol auf. Hiermit ergeben sich wiederum besonders gute Eigenschaften hinsichtlich des Rollwiderstandes sowie der Verarbeitbarkeit.

Das flüssige Polybutadien weist bevorzugt eine Glasübergangstemperatur T_{g} gemäß DSC (Apparat Mettler Toledo; Messung von +70 °C bis -150 °C, Temperaturänderung von 10 K/min; Bestimmung des Glasübergangspunktes analog ISO-FDIS 11357-2)
von -85 bis -30 °C, besonders bevorzugt -60 bis -40 °C auf. Hiermit ergeben sich besonders gute Rollwiderstandsindikatoren.

Das flüssige Polybutadien weist bevorzugt einen Vinyl-Gehalt (Gehalt an 1, 2-gebundenem Butadien, bezogen auf die Monomere der Polymerkette des Polybutadiens) von 40 bis 75 % auf, besonders bevorzugt 50 bis 75 %, ganz besonders bevorzugt 55 bis 70 %.

Das flüssige Polybutadien weist bevorzugt einen 1,4-trans-Anteil von 5 bis 30 % (bezogen auf die Monomere der Polymerkette des Polybutadiens), besonders bevorzugt von 10 bis 25 %, auf.

Der cis-Anteil des flüssigen Polybutadiens beträgt bevorzugt 5 bis 30 % (bezogen auf die Monomere der Polymerkette des Polybutadiens), besonders bevorzugt 10 bis 25 %.

Die Merkmale der Mikrostruktur wie 1,4-trans-Anteil, Vinyl-Gehalt, cis-Anteil werden nach erfolgter Synthese des flüssigen Polybutadiens (s. unten) mittels ¹³C-NMR (90,5628 MHz; Relaxationsagens Cr(acac)₃; Lösungsmittel CDCl₃, Bruker 360 MHz) bestimmt.

Das flüssige Polybutadien kann beispielsweise durch Reaktion von 3-Isocyant-n-Propyl-Triethoxysilan mit endständig Hydroxy-funktionalisiertem Polybutadien (z.B. Krasol LBH-P3000) wie in der US 2002/0082333 A1 beschrieben hergestellt werden.

Die Menge des flüssigen Polybutadiens beträgt 1 bis 40 phr, bevorzugt 2 bis 17 phr, besonders bevorzugt 5 bis 15 phr. Insbesondere mit einer Menge von 2 bis 17 phr, besonders bevorzugt 5 bis 15 phr, wird die Aufgabe der Verbesserung im Zielkonflikt aus Rollwiderstand und Reißeigenschaften und einer guten Verarbeitbarkeit besonders gut gelöst.

Die erfindungsgemäße Kautschukmischung enthält wenigstens einen Dienkautschuk mit einem im Gegensatz zum flüssigen Polybutadien vergleichsweise hohen Molekulargewicht und zwar einem Gewichtsmittel Mw des Molekulargewichts gemäß GPC von 250000 bis 5000000 g/mol. Dieser wenigstens eine Dienkautschuk stellt die hochmolekulare Kautschukkomponente dar, die die Hundert Teile bei der Berechnung der phr-Bezugsgröße darstellt, wobei auch ein Gemisch verschiedener Dienkautschuke, wie unten beschrieben, denkbar ist und die Summe aller hochmolekularen Dienkautschuke 100 phr ergibt.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei dem wenigstens einen Dienkautschuk handelt es sich um natürliches Polyisopren und/oder synthetisches Polyisopren und/oder Polybutadien (Butadien-Kautschuk) und/oder Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydrierten Acrylnitrilbutadien-Kautschuk und/oder hydrierten Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Bevorzugt handelt es sich bei dem oder den Dienkautschuk(en) jedoch um natürliches Polyisopren (NR) und/oder synthetisches Polyisopren (IR) und/oder Polybutadien (BR, Butadien-Kautschuk) und/oder Styrol-Butadien-Copolymer (SBR, Styrol-Butadien-Kautschuk) .

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Ferner ist auch ein Gemisch eines oder mehrerer natürlichen Polyisoprene mit einem oder mehreren synthetischen Polyisoprene denkbar.

Das natürliche und/oder synthetische Polyisopren weisen bevorzugt ein Gewichtsmittel Mw des Molekulargewichts gemäß GPC von 250000 bis 5000000 g/mol auf und gehören erfindungsgemäß somit zu den hochmolekularen Kautschuken, die in die Hundert Teile bei der Berechnung der phr-Bezugsgröße eingehen.

Bei dem Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem Mw von 250000 bis 600000 g/mol (zweihundertfünfzigtausend bis sechshunderttausend Gramm pro Mol).

Das oder die eingesetzte(n) Styrol-Butadien-Copolymere kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bei dem Butadien-Kautschuk (= BR, Polybutadien) kann es sich um alle dem Fachmann bekannten Typen handeln mit einem Mw von 250000 bis 5000000 g/mol. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.

Das eingesetzte Polybutadien kann mit den oben beim Styrol-Butadien-Kautschuk genannten Modifizierungen und Funktionalisierungen endgruppenmodifiziert und/oder entlang der Polymerketten funktionalisiert sein.

Erfindungsgemäß enthält die Kautschukmischung 3 bis 15 phf, bevorzugt 4,5 bis 12 phf, zumindest eines geblockten Mercaptosilans. Unter ungeblockten Mercaptosilanen sind Silane zu verstehen, die eine -S-H-Gruppe aufweisen, also ein Wasserstoffatom am Schwefelatom. Unter geblockten Mercaptosilanen sind Silane zu verstehen, die eine S-SG-Gruppe aufweisen, wobei SG die Abkürzung für eine Schutzgruppe am Schwefelatom ist. Erfindungsgemäße Schutzgruppen sind, wie unten ausgeführt Acylgruppen. Dem Fachmann ist klar, dass sich diese Angabe auf den Anfangszustand der Bestandteile der schwefelvernetzbaren Kautschukmischung bezieht und während des Mischvorgangs und/oder der Vulkanisation die Schutzgruppen abgespalten werden und die jeweiligen Schwefelatome chemisch reagieren.

Bevorzugt weist das geblockte Mercaptosilan die allgemeine Summenformel IV) auf:

IV) (R⁴ )₃ Si-Z-S-R⁵,

- wobei die Reste R⁴ innerhalb eines Moleküls gleich oder verschieden voneinander sein können und Alkoxy-Gruppen mit 1 bis 10 Kohlenstoffatomen sind, und
- wobei R⁵ eine Acylgruppe mit 1 bis 20 Kohlenstoffatomen ist, und
- wobei Z eine Alkylgruppe mit 1 bis 10 Kohlenstoffatomen ist. S ist die Abkürzung für Schwefel und Si für Silizium.

Geblockte Mercaptosilane tragen an dem Schwefelatom eine Schutzgruppe, in dem vorliegenden Fall in Formel IV) die Gruppe R⁵, wodurch sie auch "geschützte Mercaptosilane" genannt werden.

Gemäß einer bevorzugten Ausführungsform der Erfindung handelt es sich bei dem Mercaptosilan um das geblockte Mercaptosilan 3-Octanoylthio-1-propyltriethoxysilan, womit in oben genannter Formel IV) alle Reste R⁴ Ethoxy (OEt) sind und Z eine Propylgruppe ist und R⁵ eine Octanoylgruppe ist.

Überraschenderweise ergibt sich aus der Kombination des oben beschriebenen modifizierten flüssigen Polybutadiens mit einem geblockten Mercaptosilan, insbesondere 3-Octanoylthio-1-propyltriethoxysilan, ein synergistisches Zusammenwirken hinsichtlich der zu lösenden technischen Aufgabe.

Die erfindungsgemäße Kautschukmischung kann weiterhin andere im Stand der Technik bekannte Silane enthalten, wie TESPD (3,3'-Bis(triethoxysilylpropyl)disulfid) oder TESPT (3,3'-Bis(triethoxysilylpropyl)tetrasulfid) oder Octyltriethoxysilane (z.B. Si208^{®}, Fa. Evonik).

Bevorzugt enthält sie jedoch außer dem Mercaptosilan kein weiteres Silan, d.h. sie ist bevorzugt frei von weiteren Silanen wie TESPD (3,3'-Bis(triethoxysilylpropyl)disulfid) oder TESPT (3,3'-Bis(triethoxysilylpropyl)tetrasulfid) oder Octyltriethoxysilane (z.B. Si208^{®}, Fa. Evonik).

Die erfindungsgemäße Kautschukmischung enthält wenigstens eine Kieselsäure. Bevorzugt enthält die Kautschukmischung 20 bis 200 phr, besonders bevorzugt 40 bis 165 phr, zumindest einer Kieselsäure.

Gemäß einer besonders bevorzugten Ausführungsform der Erfindung enthält die Kautschukmischung 70 bis 100 phr zumindest einer Kieselsäure.

Gemäß einer weiteren besonders bevorzugten Ausführungsform der Erfindung enthält die Kautschukmischung 90 bis 120 phr zumindest einer Kieselsäure.

Die Begriffe "Kieselsäure" und "Silika" werden im Rahmen der vorliegenden Erfindung, wie auch in der Fachwelt üblich, synonym verwendet.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 60 bis 260 m²/g, besonders bevorzugt von 120 bis 230 m²/g, und eine CTAB-Oberfläche (gemäß ASTMD 3765) von 30 bis 400 m²/g, bevorzugt von 60 bis 250 m²/g, besonders bevorzugt von 120 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z.B. Zeosil^{®} 1165 MP der Firma Solvay), zum Einsatz kommen.

Die erfindungsgemäße Kautschukmischung ist gemäß einer bevorzugten Ausführungsform frei von Ruß, d.h. sie enthält 0 phr Ruß.

Gemäß einer weiteren Ausführungsform der Erfindung kann sie ferner wenigstens einen Ruß in Mengen von 0,1 bis 30 phr, bevorzugt 0,1 bis 10 phr, besonders bevorzugt 0,1 bis 5 phr, enthalten. Falls Ruß enthalten ist, ist eine geringe Menge von 0,1 bis 5 phr zwecks verbesserter Rollwiderstandsindikatoren besonders bevorzugt.

Enthält die Kautschukmischung Ruß, sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist.

Hiermit werden für die Anwendung im Fahrzeugreifen besonders gute Rollwiderstandsindikatoren (Rückprallelastizität bei 70 °C) bei guten sonstigen Reifeneigenschaften erzielt.

Die erfindungsgemäße Kautschukmischung kann neben Kieselsäure und ggf. Ruß noch weitere bekannte polare und/oder unpolare Füllstoffe, wie Alumosilicate, Kreide, Stärke, Magnesiumoxid, Titandioxid oder Kautschukgele, enthalten.

Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff denkbar.

Zinkoxid gehört im Rahmen der vorliegenden Erfindung nicht zu den Füllstoffen.

Gemäß einer bevorzugten Ausführungsform der Erfindung ist es vorteilhaft, wenn die Kautschukmischung wenigstens einen Weichmacher (zusätzlich zu dem genannten flüssigen Polybutadien) enthält, wobei die Gesamtmenge an Weichmacher bevorzugt 1 bis 90 phr, besonders bevorzugt 5 bis 70 phr, ganz besonders bevorzugt 15 bis 60 phr, beträgt. Hierdurch ergibt sich insbesondere in Kombination mit den oben genannten Bestandteilen eine besonders gute Prozessierbarkeit der Kautschukmischung, insbesondere der Extrudate vor der Vernetzung, bei gleichzeitig guten Rollwiderstandsindikatoren.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze, die nicht zu den oben genannten Klebharzen zählen, oder Flüssig-Polymere, die nicht dem oben beschriebenen modifizierten flüssigen Polybutadien entsprechen und deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese ebenfalls nicht als Kautschuk in die Berechnung der Zusammensetzung der Polymermatrix ein.

Der Weichmacher ist bevorzugt ausgewählt aus der Gruppe bestehend aus den oben genannten Weichmachern. Mineralöle sind als Weichmacher besonders bevorzugt.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z.B. Zinkethylhexanoat,
c) Wachse,
d) Mastikationshilfsmittel, wie z. B. 2,2'-Dibenzamidodiphenyldisulfid (DBD) und
e) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 1 bis 8 phr, besonders bevorzugt 1,5 bis 4 phr, Zinkoxid (ZnO).

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m² /g auf. Es kann aber auch ein Zinkoxid mit einer BET-Oberfläche von 10 bis 100 m²/g, wie z.B. so genannte "nano-Zinkoxide", verwendet werden.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Kautschukmischung kann auch Haftsysteme wie z.B. Cobalt-Salze und Verstärkerhärze (z.b. Resorcin-HMMM/HMT) zum Einsatz in Body-Mischungen, insbesondere Gummierungsmischungen, enthalten.

Die Vulkanisation der erfindungsgemäßen schwefelvernetzbaren Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern. Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.

DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen
Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel A):

A) G[CₐH₂ₐ-CH₂-S_{b}Y]_{c}

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5. Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe).

Hiermit werden sehr gute Abrieb- und Reißeigenschaften der erfindungsgemäßen Kautschukmischung erzielt.

Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer vier vernetzen, wie in der WO 2010/049216 A2 beschrieben, wie z.B. ein Vulkanisationsmittel der Formel A), sowie die oben genannten Systeme Vulkuren^{®}, Duralink^{®} und Perkalink^{®} begrifflich als Vulkanisationsmittel zusammengefasst.

Der erfindungsgemäßen Kautschukmischung werden bei deren Herstellung bevorzugt wenigstens ein Vulkanisationsmittel ausgewählt aus der Gruppe enthaltend, besonders bevorzugt bestehend aus, Schwefel und/oder Schwefelspender und/oder Vulkanisationsbeschleuniger und/oder Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung, insbesondere für die Anwendung im Fahrzeugreifen, herstellen.

Besonders bevorzugt ist die Verwendung der Beschleuniger TBBS und/oder CBS und/oder Diphenylguanidin (DPG).

Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.

Gemäß einer bevorzugten Weiterbildung der Erfindung werden bei der Herstellung der schwefelvernetzbaren Kautschukmischung mehrere Beschleuniger in der Fertigmischstufe zugegeben.

Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, wie dem Laufstreifen und/oder der Seitenwand und/oder in wenigstens einem inneren Bauteil.

Als Body-Mischung werden hierbei die Kautschukmischungen für die inneren Bauteile eines Reifen bezeichnet. Als innere Reifenbauteile werden im Wesentlichen Squeegee, Seitenwand, Innenseele (Innenschicht), Kernprofil, Gürtel, Schulter, Gürtelprofil, Karkasse, Wulstverstärker, Wulstprofil, Hornprofil und Bandage bezeichnet.

Bevorzugt wird die erfindungsgemäße Kautschukmischung jedoch in Laufstreifen von Fahrzeugreifen verwendet, bevorzugt hierbei wenigstens in der Cap von Laufstreifen mit Cap/Base-Konstruktion.

Zur Verwendung in Fahrzeugreifen wird die Mischung als Fertigmischung vor der Vulkanisation bevorzugt in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden.

Die Herstellung der erfindungsgemäßen Kautschukmischung zur Verwendung als Body- Mischung in Fahrzeugreifen erfolgt wie bereits für den Laufstreifen beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Die Erfindung soll nun anhand von Vergleichs- und Ausführungsbeispielen, die in den Tabellen 1 und 2 zusammengefasst sind, näher erläutert werden.

Die Vergleichsmischungen sind mit V, die erfindungsgemäßen Mischungen sind mit E gekennzeichnet.

Das endständig Organosilicium-modifizierte flüssige Polybutadien wurde durch Reaktion von 3-Isocyant-n-Propyl-Triethoxysilan mit endständig Hydroxy-funktionalisiertem Polybutadien (Krasol LBH-P3000), analog zu der Beschreibung in der US 2002/0082333 A1, Absatz [0053], hergestellt, wobei 155 g 3-Isocyant-n-Propyl-Triethoxysilan pro kg Krasol LBH-P3000 verwendet wurden. Die Reaktion wurde bei 80 °C in einem 5L (Liter) Reaktor durchgeführt.

Die Mischungsherstellung erfolgte nach dem in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Aus sämtlichen Mischungen wurden Prüfkörper durch Vulkanisation nach 20 Minuten unter Druck bei 160°C hergestellt und mit diesen Prüfkörpern für die Kautschukindustrie typische Materialeigenschaften mit den im Folgenden angegebenen Testverfahren ermittelt.
- Mooney-Viskosität (ML1+3), gemäß ASTM D1646 (Mooney-Einheiten abgekürzt M.E.)
- Umsatzzeit von 10% (t₁₀ Anvulkanisationszeit), 90% und 95% Umsatz (t₉₀ und t₉₅ Ausvulkanisationszeiten) mittels rotorlosem Vulkameter (MDR = Moving Disc Rheometer) gemäß ASTM D 5289-12 /ISO 6502
- Shore-A-Härte bei Raumtemperatur (RT) und bei 70 °C gemäß DIN ISO 7619-1
- Rückprallelastizität (Rückpr.) bei 70 °C gemäß DIN 53 512

### Verwendete Substanzen

^{a)} NR: Naturkautschuk TSR
^{b)} SBR: SSBR, SLR 4601, Fa. Trinseo
^{c)} Kieselsäure Ultrasil^{®} VN3, Fa. Evonik
^{d)} flüssiges Polybutadien, organosilicium-modifiziert erhalten wie oben beschrieben, Vinyl-Gehalt = 63,3 %, trans-Anteil = 17,5 %, cis-Anteil = 19 %, T_{g} = - 56 °C, Mw = 7400 g/mol Mn = 6300 g/mol, Polymer mit Modifizierung gemäß Formel III)
^{e)} Weichmacher: 5 phr Rapsöl + 20 phr MES
^{f)} Zusatzstoffe: 5, 2 phr Alterungsschutzmittel (DTPD, 6PPD, TMQ), 2 phr Ozonschutzwachs, 2 phr Zinkoxid (ZnO), 1 phr Stearinsäure, 4 phr Verarbeitungshilfsmittel (Fettsäureester und Zinkseifen)
^{g)} S₂-Silan: TESPD, JH-S75, Fa. Jingzhou Jianghan Fine Chemical
^{h)} geblocktes Mercaptosilan:
3-(Octanoylthio)-1-Propyl-Triethoxysilan, Fa. Momentive
ⁱ⁾ Beschleuniger: 2 phr DPG, 2 phr CBS
^{j)} löslicher Schwefel
^{k)} SSBR Sprintan SLR-3402, Fa. Trinseo
^{l)} Weichmacher: flüssiges Polybutadien (nicht modifiziert, MW = 8000 g/mol), LBR307, Fa. Kuraray
^{m)} Beschleuniger: 3 phr DPG + 2,4 phr CBS

**Tabelle 1**

| **Bestandteile** | **Einheit** | **V1** | **V2** | **V3** | **E1** |
|---|---|---|---|---|---|
| NR ^{a)} | phr | 30 | 30 | 30 | 30 |
| SBR ^{b)} | phr | 70 | 70 | 70 | 70 |
| Ruß N339 | phr | 5 | 5 | 5 | 5 |
| Kieselsäure ^{c)} | phr | 86 | 86 | 86 | 86 |
| fl. PB ^{d)} | phr | - | 15 | - | 15 |
| Weichmacher ^{e)} | phr | 25 | 25 | 25 | 25 |
| Zusatzstoffe ^{t)} | phr | 14,2 | 14,2 | 14,2 | 14,2 |
| Silan ^{g)} | phf | 7,2 | 7,2 | - | - |
| gebl. Mercaptosilan h) | phf | - | - | 10,2 | 10,2 |
| Beschl. ⁱ⁾ | phr | 4 | 4 | 4 | 4 |
| S ^{j)} | phr | 1, 7 | 1, 7 | 1, 7 | 1, 7 |

| **Physikalische Eigenschaften** | | | | | |
|---|---|---|---|---|---|
| Viskosität | M.E. | 61 | 49 | 49 | 46 |
| t₁₀ | min. | 2,9 | 4,9 | 3,3 | 3,7 |
| t₉₀ | min. | 13,2 | 14,8 | 12,4 | 11,2 |
| t₉₅ | min. | 17,6 | 18,5 | 16,9 | 14,7 |
| Härte RT | Shore A | 67 | 66 | 65 | 63 |
| Härte 70 °C | Shore A | 61 | 60 | 60 | 58 |
| Rückpr. 70 °C | % | 46,9 | 49,6 | 50,5 | 53 |

**Tabelle 2**

| **Bestandteile** | **Einheit** | **V4** | **V5** | **V6** | **E2** |
|---|---|---|---|---|---|
| NR ^{a)} | phr | 20 | 20 | 20 | 20 |
| SBR ^{k)} | phr | 80 | 80 | 80 | 80 |
| Ruß N339 | phr | 5 | 5 | 5 | 5 |
| Kieselsäure ^{c)} | phr | 110 | 110 | 110 | 110 |
| fl. PB ^{d)} | phr | - | 15 | - | 15 |
| Weichmacher ^{l)} | phr | 49 | 49 | 49 | 49 |
| Zusatzstoffe ^{f)} | phr | 14,2 | 14,2 | 14,2 | 14,2 |
| Silan ^{g)} | phf | 7,2 | 7,2 | - | - |
| gebl. Mercaptosilan h) | phf | - | - | 11,8 | 11,8 |
| Beschl. ^{m)} | phr | 5,4 | 5,4 | 5,4 | 5,4 |
| S ^{j)} | phr | 2,0 | 2,0 | 2,0 | 2,0 |

| **Physikalische Eigenschaften** | | | | | |
|---|---|---|---|---|---|
| Viskosität | M.E. | 68 | 60 | 57 | 55 |
| t₁₀ | min. | 0, 7 | 4,2 | 2,8 | 3,4 |
| t₉₀ | min. | 9,3 | 11,5 | 10,3 | 8,6 |
| t₉₅ | min. | 13,1 | 14,9 | 14,9 | 11,3 |
| Härte RT | Shore A | 60 | 56 | 55 | 54 |
| Härte 70 °C | Shore A | 53 | 50 | 50 | 49 |
| Rückpr. 70 °C | % | 41 | 44 | 45 | 46 |

Wie Tabelle 1 und 2 zu entnehmen ist, werden mit den erfindungsgemäßen Kautschukmischungen E1 und E2 durch die Kombination von organosilicium-modifiziertem flüssigem Polybutadien und Mercaptosilan die Ausvulkanisationszeiten reduziert, obwohl dies durch die Einzelmaßnahmen (s. V2 und V3 bzw. V5 und V6) nicht zu erwarten gewesen wäre. Gleichzeitig verbessern sich die Rollwiderstandsindikatoren, insbesondere die Rückprallelastizitäten bei 70 °C. Somit zeigt sich durch die genannte Kombination der Bestandteile überraschenderweise ein synergistisches Zusammenwirken im Hinblick auf die Verbesserung des Rollwiderstandes und der Heizzeiten bei gleichbleibenden sonstigen Reifeneigenschaften.

## Patentansprüche

1. Schwefelvernetzbare Kautschukmischung enthaltend
- wenigstens einen Dienkautschuk und
- wenigstens eine Kieselsäure und
- 3 bis 15 phf zumindest eines geblockten Mercaptosilans, wobei geblockte Mercaptosilane eine Schutzgruppe am Schwefelatom aufweisen, wobei die Schutzgruppen Acylgruppen sind, und
- 1 bis 40 phr zumindest eines flüssigen Polybutadiens, welches endständig organosilicium-modifiziert ist, und ein Gewichtsmittel Mw des Molekulargewichts gemäß GPC von 500 bis 12000 g/mol aufweist, wobei
das flüssige Polybutadien mit zumindest einem Rest gemäß Formel I) modifiziert ist:
I) (R¹R²R³) Si-
wobei R¹, R², R³ in den Strukturen gleich oder verschieden sein können und ausgewählt sein können aus linearen oder verzweigten Alkoxy-, Cycloalkoxy,- Alkyl-, Cycloalkyl- oder Arylgruppen mit 1 bis 20 Kohlenstoffatomen, und wobei der Rest gemäß Formel I) direkt oder über eine Brücke an die Polymerkette des Polybutadiens angebunden ist und wobei die Brücke aus einer gesättigten oder ungesättigten Kohlenstoffkette besteht, die auch cyclische und/oder aliphatische und/oder aromatische Elemente sowie in oder an der Kohlenstoffkette Heteroatome enthalten kann.

2. Kautschukmischung nach Anspruch 1, **dadurch gekennzeichnet, dass** der Rest gemäß Formel I) nicht direkt, sondern über eine Brücke gemäß Formel II) angebunden ist:
II) (R¹R²R³) Si-Y-X-,
wobei in Formel II) Y eine Alkylkette (-CH₂)ₙ- mit n = 1 bis 8 ist und X eine funktionelle Gruppe, die ausgewählt ist aus der Gruppe bestehend aus Ester, Ether, Urethan, Harnstoff, Amin, Amid, Thioether, Thioester.

3. Kautschukmischung nach Anspruch 2, **dadurch gekennzeichnet, dass** das organosilicium-modifizierte flüssige Polybutadien eine Struktur gemäß Formel III) aufweist:

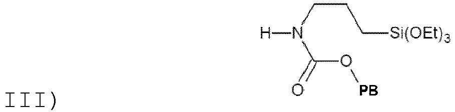

4. Kautschukmischung nach zumindest einem der vorhergehenden Ansprüche, **dadurch gekennzeichnet, dass** das flüssige Polybutadien mit endständiger Organosilizium-Modifizierung eine Glasumwandlungstemperatur T_{g} gemäß DSC von -85 bis -30 °C aufweist.

5. Kautschukmischung nach zumindest einem der vorhergehenden Ansprüche, **dadurch gekennzeichnet, dass** sie 2 bis 17 phr des flüssigen Polybutadiens, welches endständig organosilicium-modifiziert ist, enthält.

6. Kautschukmischung nach zumindest einem der vorhergehenden Ansprüche, **dadurch gekennzeichnet, dass** das geblockte Mercaptosilan die allgemeine Summenformel IV) aufweist:
IV) (R⁴)₃Si-Z-S-R⁵ ,
wobei die Reste R⁴ innerhalb eines Moleküls gleich oder verschieden voneinander sein können und Alkoxy-Gruppen mit 1 bis 10 Kohlenstoffatomen sind, und
wobei R⁵ eine Acylgruppe mit 1 bis 20 Kohlenstoffatomen ist, und
wobei Z eine Alkylgruppe mit 1 bis 10 Kohlenstoffatomen ist.

7. Kautschukmischung nach Anspruch 6, **dadurch gekennzeichnet, dass** es sich bei dem Mercaptosilan um das geblockte Mercaptosilan 3-Octanoylthio-1-propyltriethoxysilan handelt.

8. Fahrzeugreifen, der wenigstens ein Bauteil aufweist, welches zumindest zum Teil aus einer mit Schwefel vulkanisierten Kautschukmischung nach zumindest einem der Ansprüche 1 bis 7 besteht.

9. Fahrzeugreifen nach Anspruch 8, **dadurch gekennzeichnet, dass** es sich bei dem Bauteil zumindest um den Laufstreifen handelt.

## Claims

1. Sulfur-crosslinkable rubber mixture comprising:
- at least one diene rubber and
- at least one silica and
- from 3 to 15 phf of at least one blocked mercaptosilane, wherein blocked mercaptosilanes comprise a protection group at the sulfur atom, wherein the protection groups are acyl groups, and
- from 1 to 40 phr of at least one liquid polybutadiene, which is terminally organosilicon-modified, and exhibits a weight-average molecular weight Mw according to GPC of 500 to 12 000 g/mol, the liquid polybutadiene being modified with at least one radical according to formula I):
**I)** **(R¹R²R³)Si-**
in which R¹, R² and R³ can be identical or different in the structures and can be chosen from linear or branched alkoxy, cycloalkoxy, alkyl, cycloalkyl or aryl groups with 1 to 20 carbon atoms, and in which the radical according to formula I) is bonded directly or via a bridge to the polymer chain of the polybutadiene and in which the bridge consists of a saturated or unsaturated carbon chain which can also contain cyclic and/or aliphatic and/or aromatic elements and also can contain heteroatoms in or on the carbon chain.

2. Rubber mixture according to Claim 1, **characterized in that** the radical according to formula I) is not bonded directly but via a bridge according to formula II):
**II)** **(R¹R²R³)Si-Y-X-,**
in which, in formula II), Y is an alkyl chain -(CH₂)ₙ- with n = 1 to 8 and X is a functional group which is chosen from the group consisting of ester, ether, urethane, urea, amine, amide, thioether or thioester.

3. Rubber mixture according to Claim 2, **characterized in that** the organosilicon-modified liquid polybutadiene exhibits a structure according to formula III):

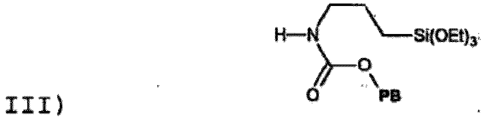

4. Rubber mixture according to at least one of the preceding claims, **characterized in that** the liquid polybutadiene with terminal organosilicon modification exhibits a glass transition temperature T_{g} according to DSC of -85°C to -30°C.

5. Rubber mixture according to at least one of the preceding claims, **characterized in that** it comprises from 2 to 17 phr of the liquid polybutadiene which is terminally organosilicon-modified.

6. Rubber mixture according to at least one of the preceding claims, **characterized in that** the blocked mercaptosilane exhibits the general total molecular formula IV):
IV) (R⁴)₃Si-Z-S-R⁵
in which the R⁴ radicals within a molecule can be identical to or different from one another and are alkoxy groups with from 1 to 10 carbon atoms, and in which R⁵ is an acyl group with from 1 to 20 carbon atoms, and
in which Z is an alkyl group with from 1 to 10 carbon atoms.

7. Rubber mixture according to Claim 6, **characterized in that** the mercaptosilane is the blocked mercaptosilane 3-octanoylthio-1-propyltriethoxy-silane.

8. Vehicle tyre which exhibits at least one component which consists, at least in part, of a rubber mixture vulcanized with sulfur according to at least one of Claims 1 to 7.

9. Vehicle tyre according to Claim 8, **characterized in that** the component is at least the tread.

## Revendications

1. Mélange de caoutchouc réticulable par le soufre, contenant
- au moins un caoutchouc diénique et
- au moins une silice et
- 3 à 15 pcc d'au moins un mercaptosilane bloqué, des mercaptosilanes bloqués présentant un groupe protecteur sur l'atome de soufre, les groupes protecteurs étant des groupes acyles, et
- 1 à 40 pcc d'au moins un polybutadiène liquide, qui est modifié par organosilicium en position terminale et qui présente une moyenne pondérale M_{w} du poids moléculaire selon la CPG de 500 à 12.000 g/mole, le polybutadiène liquide étant modifié par au moins un radical selon la formule I) :
I) (R¹R²R³) Si-
R¹, R², R³, dans les structures, pouvant être identiques ou différents et pouvant être choisis parmi les groupes alcoxy, alkyle, linéaires ou ramifiés, cycloalcoxy, cycloalkyle ou aryle, comprenant 1 à 20 atomes de carbone et le radical selon la formule I) étant lié directement ou via un pont à la chaîne polymère du polybutadiène et le pont étant constitué par une chaîne carbonée saturée ou insaturée qui peut également contenir des éléments cycliques et/ou aliphatiques et/ou aromatiques ainsi que, dans ou sur la chaîne carbonée, des hétéroatomes.

2. Mélange de caoutchouc selon la revendication 1, **caractérisé en ce que** le radical selon la formule I) n'est pas lié directement mais via un pont selon la formule II) :
II) (R¹R²R³)Si-Y-X-,
dans la formule II), Y représentant une chaîne alkyle (-CH₂)ₙ- où n = 1 à 8 et X représentant un groupe fonctionnel qui est choisi dans le groupe constitué par ester, éther, uréthane, urée, amine, amide, thioéther, thioester.

3. Mélange de caoutchouc selon la revendication 2, **caractérisé en ce que** le polybutadiène liquide modifié par organosilicium présente une structure selon la formule III) :

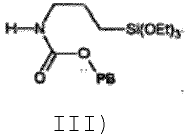

4. Mélange de caoutchouc selon au moins l'une quelconque des revendications précédentes, **caractérisé en ce que** le polybutadiène liquide présentant une modification par organosilicium en position terminale présente une température de transition vitreuse T_{g} selon la DSC (calorimétrie différentielle à balayage) de -85 à -30°C.

5. Mélange de caoutchouc selon au moins l'une quelconque des revendications précédentes, **caractérisé en ce qu'**il contient 2 à 17 pcc du polybutadiène liquide qui est modifié par organosilicium en position terminale.

6. Mélange de caoutchouc selon au moins l'une quelconque des revendications précédentes, **caractérisé en ce que** le mercaptosilane bloqué présente la formule brute générale IV) :
IV) (R⁴)₃Si-Z-S-R⁵,
les radicaux R⁴ au sein d'une molécule pouvant être identiques ou différents les uns des autres et représentant des groupes alcoxy comprenant 1 à 10 atomes de carbone et
R⁵ signifiant un groupe acyle comprenant 1 à 20 atomes de carbone et
Z représentant un groupe alkyle comprenant 1 à 10 atomes de carbone.

7. Mélange de caoutchouc selon la revendication 6, **caractérisé en ce qu'**il s'agit, pour le mercaptosilane, du mercaptosilane bloqué 3-octanoylthio-1-propyltriéthoxysilane.

8. Pneu de véhicule qui présente au moins un élément qui est constitué, du moins en partie, par un mélange de caoutchouc vulcanisable par le soufre selon au moins l'une quelconque des revendications 1 à 7.

9. Pneu pour véhicule selon la revendication 8, **caractérisé en ce qu'**il s'agit, pour l'élément, au moins de la bande de roulement.
